# EUROPEAN PATENT SPECIFICATION

(11) **EP 0 684 884 B1**
(45) Date of publication and mention of the grant of the patent: **11.12.1996**
(21) Application number: 92911836.2
(22) Date of filing: 19.05.1992
(51) Int. Cl.: B23B 5/26, B23Q 3/12

(54) **FASTENING DEVICE FOR MILLING TOOLS AND THE LIKE, ADAPTABLE FOR VARIOUS HOLDER SIZES**
SPANNVORRICHTUNG FÜR FRÄSER ODER ÄHNLICHE, ANPASSBAR FÜR VERSCHIEDENE HALTERGRÖSSEN
DISPOSITIF DE FIXATION POUR FRAISEUSES ET MACHINES SIMILAIRES ET ADAPTABLE A DES DIMENSIONS DE SUPPORT DIFFERENTES

(30) Priority: 04.06.1991 SE 9101689
(43) Date of publication of application: 06.12.1995
(73) Proprietor: MIRCONA AB, S-801 33 Gävle (SE)
(72) Inventor: MIHIC, Wlajko, S-802 67 Gävle (SE)
(74) Representative: Nordén, J. Ake
(86) International application number: PCT/SE92/00332
(87) International publication number: WO 92/21464

(56) References cited:
- CH-A- 515 094
- DE-A- 4 005 938
- GB-A- 2 194 474
- SE-B- 409 832
- US-A- 4 813 831
- DERWENT'S ABSTRACT, No. 88-247 936/35; & SU,A,1373496, publ. week 8835 (LENGD PARGOLOVSK WK).

## Description

### Technical field of the invention

This invention relates to a fastening device for the fastening of to a milling tool mandrel or the like rotatable carrier for example at boring or milling machines or the like.

### Background of the invention

SE,B, 409 832 discloses a device for the fastening of a tool holder wherein an axial screw is tightened rigidly in a bore of the centre trunnion of the mandrel, said screw having a saucer like head with obliquely arranged lower side and serving as fastener for a tool holder pushed onto and over said trunnion and screw and having radially arranged locking screws with conical ends displaceable to engage the obliquely arranged lower side of the head of the screw.

The intention behind the known device was to facilitate the changing of tools earlier performed by manipulating a locking screw accessible from the opposite end of the tool holder forcing same into and out from the threaded bore at the mandrel trunnion.

By utilizing as suggested a central holding screw having a saucer shaped head with an inwardly inclined inner side the loosening and fastening operations are facilitated, but by moving the area of engagement for the locking elements or screws so far away axially from the cooperating axial abutment faces, the stability is endangered. This especially if the tool holder sleeve to be slided onto the mandrel trunnion is too short, which occurs as different makers have different dimensions. The axially acting moment of the inclined surface engaging conical ends of the locking screws, will be insufficient to press the sleeve with sufficient force against the abutment face of the mandrel especially when the points of the locking screws meet the axially oriented fastening screw shank. The localization of the locking screws outside the rigid and stable mandrel trunnion might result in a heavy wear because of the leverage occurring between the tool holder and mandrel on the operation of the milling tool.

### The object of the invention

It has been noted that the axial dimension of the central trunnion at milling machine mandrels and the like might deviate from the measure decided and even if the deviation is relatively seen very small, it might result in that the tool holder cannot engage the abutment face properly. Similarly it occurs that the sleeve portion of the tool holder does not meet the requirements of dimension and is either too long or too short axially. The drawbacks mentioned above concerning the known device is the more pronounced if also the dimensions of the cooperating parts arc faulty. One aspect of this invention is to bring about a fastening device which independently of deviations from given dimensions ensures a stable fastening.

### Summary of the invention

The invention, as defined in the appended claim 1, is based on a milling machine mandrel trunnion having a threaded central bore and this trunnion is used as support for a specific sleeve according to the invention. The sleeve has a circumferential V-groove and also, at its one end face recesses adapted to the locking wedge of the mandrel. A fastening screw having an essentially flat disc like head is adapted to be threaded into the central trunnion bore until its head engages the outer end face of the sleeve pressing the sleeve inwardly towards the opposite facing end surface of the mandrel. The tool holder or the like has a central opening closely fitting onto the sleeve and at the inner end of the holder communicating with the recesses for a locking wedge, the tool holder body also presents three radially arranged threaded bores directed towards the centre of the central opening for locking screws having a conical inner end, said screws adapted to engage the V-groove of the sleeve secured onto the mandrel trunnion.

### Brief description of the drawings

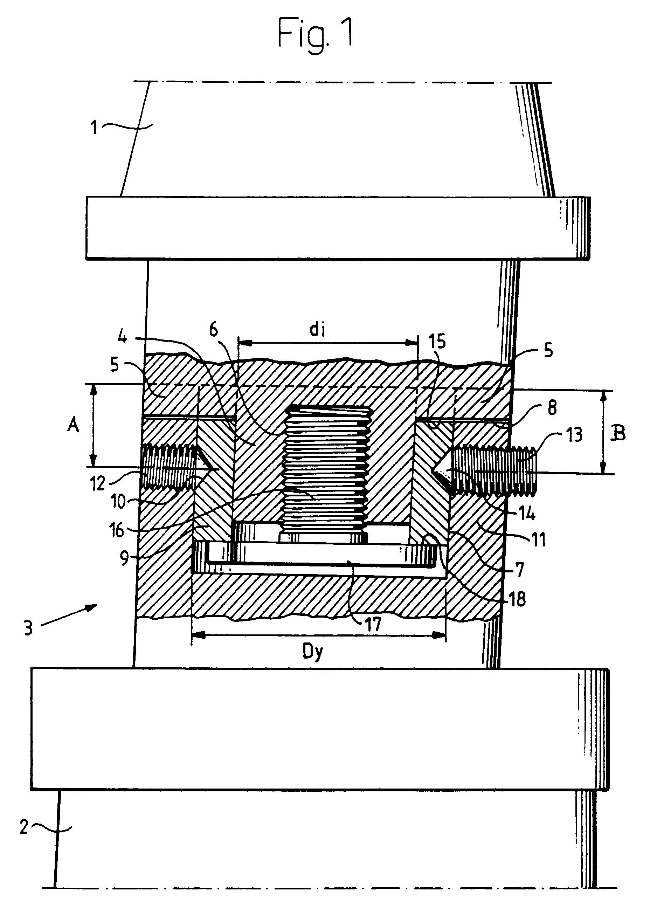

One embodiment of the device according to the invention will be described in detail in the following with references to the attached drawing, which schematically and in a sectional view shows a portion of a milling machine mandrel and a portion of a tool holder with the fastening device according to the invention.

### A detailed description of a preferred embodiment

In the embodiment shown a milling machine mandrel is designated 1, a tool holder designated 2 and the whole unit with 3.

At the one end of the mandrel 1 there is a central trunnion 4 and diametrically over the end face of the mandrel there is a wedge means 5 having one section on each side of the trunnion 4. The trunnion 4 has a concentrically arranged threaded bore 6.

The tool holder has at its one end a concentrically arranged cylindrical bore 7 and radially there from extends recesses 8 intended to cooperate with and engage the wedge means 5.

According to the invention there is a cylindrical sleeve 9 having an inner diameter dᵢ corresponding to the outer diameter of the central mandrel 4 and an outer diameter d_{y} corresponding to the inner diameter of the cylindrical bore 7 of the tool holder 2. The outside of the sleeve 9 presents a circumferential V-groove 10 which is localized a distance A from the end face of the mandrel surrounding the trunnion.

The portion 11 of the tool holder enclosing the sleeve 9 and also the trunnion 4 presents a number of threaded bores 12 and into such are locking screws 13 having a conical end portion 14 inserted. On inserting, the screws 13 will engage groove 10 and thereby lock the sleeve and tool holder together.

The sleeve 9 is in turn connected to the mandrel by the configuration related engagement between the sleeve having recesses 15 complementary to the wedge 5 and the engagement between the outer face of the mandrel or trunnion and the inside of the sleeve, and in axial direction by the engagement from a tightening screw 16 having a specifically adapted head 17, the circumferential portion thereof engaging the end face 18 of the sleeve.

As can be seen the axial length of the sleeve 9 is larger than the axial length of the trunnion 4. This ensures under all circumstances a stable and rigid mounting of the sleeve. The sleeve 9 has a length so adapted that it covers even the largest deviations in length at trunnions meaning that you do not have to risk that the screw head 17 will engage the end of the trunnion before pressing the sleeve 9 completely or to desired extent towards the end face of the mandrel 1. This means that the measure A earlier mentioned, i.e. from the end face of the mandrel to the radial central plane of the V-groove, always is equal even if the mandrel or trunnion 4 deviates from standard. The sleeves can be delivered in given and standardized outer diameter sizes d_{y} adapted to the inner diameter of the tool holder. The diameter of the trunnion of existing mandrels serves as a base value on determining the inner diameter dᵢ of the sleeve 9 and naturally also an individual machining may take place on side. As the measure A is to be identic or one and the same, at all sleeves and tool holders the fastening device may be used as fitting part and be changed between different tool holders and mandrels.

In order to reach a stable and rigid fastening, the point of each of the locking screws on threading in, has to meet the side of the V-groove 10 remote from the mandrel in order to - on proceeding the threading - allow the conical screw ends, simultaneously as they move radially inwardly in the groove, to displace themselves and also the tool holder 2 towards the mandrel 1. In order to achieve this and the desired tightening force, the measure A must be equal with or less than a measure B between the end face of the tool holder and a radial plane through the centre of screws 13, so that the points of each of the screws initially is localized further from the end face of the mandrel than the centre plane of the V-groove of the sleeve 9 already secured to the end face of the mandrel by means of the screw 16.

## Claims

1. Fastening device for tool holders (2) and the like at mandrels (1) and similar rotatable machine parts, wherein the mandrel has a central protruding trunnion (4) and adjacent the root portion of the same arranged wedge means (5) and the tool holder has a central opening (7) intended to receive the central trunnion and lateral recesses intended to cooperate with the wedge means and in its hollow portion radial bores (12) for screw means (13) intended to engage inclined abutment portions at the trunnion,
**characterized** by that the fastening device includes a cylindrical sleeve (9) having an inner diameter (dᵢ) corresponding to the outer diameter of the trunnion (4) and an outer diameter (d_{y}) corresponding to the inner diameter of the opening (7) at the tool holder (2) and with radial recesses (15) at one end adapted to the wedge means (5), and at the opposite end, a radial circumferential abutment surface and also an external circumferential essentially V-shaped groove (10), that a screw (16) having a head (17) adapted to the axially facing abutment surface (18) of the sleeve (9) is by threading insertable into a per se known axial and central threaded bore (6) at the trunnion (4) for pressing the sleeve (9) against the end face of the mandrel (1) surrounding the trunnion (4) and establishing a rigid engagement against turning between the wedge means (5) and the recesses (15), that the screws (13) arranged in the threaded radial bores (12) of the hollow tool holder portion surrounding the sleeve have conical inner ends (14) arranged on tightening to engage both sides of the V-shaped groove (10) in order to position the tool holder in both axial directions, that the axial length of the sleeve (9) is at least equal and preferrably greater than any possible axial length of the central trunnion (4) at available mandrels and that the axial distance (A) between the radial plane through the V-groove (10) of the sleeve and the abutment end face of the mandrel (1) closely corresponds with a determined axial distance (B) between the end face of the tool holder and a radial plane through the centre of the said screws (13).

## Patentansprüche

1. Spannvorrichtung für Werkzeughalter (2) o.ä. an Spindeln (1) und ähnlichen drehbaren Maschinenteilen, wobei die Spindel einen zentral hervortretenden Drehzapfen (4) und benachbart zu ihrem Fußteil eine Keilanordnung (5) aufweist und der Werkzeughalter mit einer zentralen Öffnung (7) zur Aufnahme des zentralen Drehzapfens und seitlichen Aussparungen versehen ist, die zum Zusammenwirken mit den Keilanordnungen vorgesehen sind, wobei in seinen hohlen Abschnitt radiale Bohrungen (12) für Schrauben (13) eingebracht sind, die zum Eingriff mit schrägen Auflageteilen an dem Drehzapfen dienen,
dadurch gekennzeichnet, daß die Spannvorrichtung eine zylindrische Hülse (9) aufweist, die einen inneren Durchmesser (di) entsprechend dem äußeren Durchmesser des Drehzapfens (4) und einen äußeren Durchmesser (Dy) entsprechend dem inneren Durchmesser der Öffnung (7) an dem Werkzeughalter (2) hat und an einem Ende mit radialen Aussparungen (15) versehen ist, die an die Keilanordnung (5) angepaßt sind, und an dem gegenüberliegenden Ende eine radiale, über den Umfang verlaufende Auflagefläche und eine äußere, über den Umfang verlaufende und im wesentlichen V-förmige Nut (10) aufweist, daß eine Schraube (16) mit einem Kopf (17), der an die axial gegenüberliegende Auflagefläche (18) der Hülse (9) angepaßt ist, durch Drehen in eine an sich bekannte, axiale und zentrale Gewindebohrung (6) an dem Drehzapfen (4) zum Drücken der Hülse (9) gegen die Endfläche der Spindel (1), die den Drehzapfen (4) umgibt, einsetzbar ist, und ein fester Eingriff gegen ein Verdrehen zwischen der Keilanordnung (5) und den Aussparungen (15) hergestellt wird, daß die Schrauben (13), die in den mit Gewinden versehenen radialen Bohrungen (12) des hohlen Werkzeughalterabschnitts, der die Hülse umgibt, angeordnet sind, ein konisches inneres Ende (14) aufweisen, das so angeordnet ist, daß es beim Festziehen mit beiden Seiten der V-förmigen Nut (10) eingreift, um den Werkzeughalter in beiden axialen Richtungen zu positionieren, daß die axiale Länge der Hülse (9) mindestens genauso groß und vorzugsweise größer ist, als jede mögliche axiale Länge des zentralen Drehzapfens (4) an verfügbaren Spindeln, und daß der axiale Abstand (A) zwischen der radialen Ebene durch die V-förmige Nut (10) der Hülse und der Auflage-Endfläche der Spindel (1) eng mit einem festgelegten axialen Abstand (B) zwischen der Endfläche des Werkzeughalters und einer radialen Ebene durch das Zentrum der Schrauben (13) korrespondiert.

## Revendications

1. Dispositif de fixation pour porte-outils et similaires au niveau de mandrins et parties de machines rotatives similaires, dans lequel le mandrin a un tourillon central faisant saillie et adjacent à sa partie d'embase, un moyen de coin agencé, et le porte-outil a une ouverture centrale destinée à recevoir le tourillon central et des évidements latéraux destinés à coopérer avec le moyen de coin et, dans sa partie creuse, des alésages radiaux pour un moyen de vis destiné à venir en contact avec des parties de butée inclinées au niveau du tourillon, caractérisé en ce que le dispositif de fixation comprend un manchon cylindrique ayant un diamètre interne (dᵢ) correspondant au diamètre externe du tourillon et un diamètre externe (d_{y}) correspondant au diamètre interne de l'ouverture située sur le porte-outil et présentant des évidements radiaux à une extrémité adaptée à un moyen de coin, et à l'extrémité opposée, une surface de butée circonférentielle radiale et également une rainure essentiellement en forme de V, circonférentielle, externe ; une vis ayant une tête adaptée à la surface de butée, faisant face axialement, du manchon peut être insérée par serrage dans un trou fileté central et axial connu en soi, au niveau du tourillon afin de presser le manchon contre la face terminale du mandrin entourant le tourillon et établissant un contact rigide qui l'empêche de tourner entre le moyen de coin et les évidements ; les vis agencées dans les trous radiaux filetés de la partie creuse du porte-outil entourant le manchon ont des extrémités internes coniques agencées par serrage pour venir en contact avec les deux côtés de la rainure en forme de V en vue de placer le porte-outil dans les deux directions axiales ; la longueur axiale du manchon est au moins égale et préférentiellement supérieure à toute longueur axiale possible du tourillon central au niveau des mandrins libres et la distance axiale (A) entre le plan radial passant par la rainure en V du manchon et la face terminale de butée du mandrin correspond de façon stricte à une distance (B) axiale déterminée, calculée entre la face terminale du porte-outil et un plan radial passant par le centre desdites vis.
